# EUROPÄISCHE PATENTSCHRIFT

(11) **EP 3 360 998 B1**
(45) Veröffentlichungstag und Bekanntmachung des Hinweises auf die Patenterteilung: **12.01.2022**
(21) Anmeldenummer: 18151784.8
(22) Anmeldetag: 16.01.2018
(51) Int. Cl.: A47L 15/44, D06F 39/02, D06F 34/22, D06F 103/20, D06F 39/08, A47L 15/42

(54) **PUMPENVORRICHTUNG FÜR EIN WASSERFÜHRENDES HAUSHALTSGERÄT, VERFAHREN ZUM BETRIEB EINER SOLCHEN PUMPENVORRICHTUNG UND WASSERFÜHRENDES HAUSHALTSGERÄT**
WATER-CONDUCTING DOMESTIC APPLIANCE AND PUMP DEVICE FOR A WATER-CONDUCTING DOMESTIC APPLIANCE, METHOD FOR OPERATING SUCH A PUMP DEVICE
DISPOSITIF DE POMPAGE POUR UN APPAREIL ÉLECTROMÉNAGER D'ACHEMINEMENT D'EAU, PROCÉDÉ DE FONCTIONNEMENT D'UN TEL DISPOSITIF DE POMPAGE ET APPAREIL ÉLECTROMÉNAGER D'ACHEMINEMENT D'EAU

(30) Priorität: 09.02.2017 DE 102017202062
(43) Veröffentlichungstag der Anmeldung: 15.08.2018
(73) Patentinhaber: E.G.O. Elektro-Gerätebau GmbH, 75038 Oberderdingen (DE)
(72) Erfinder: Ose, Lutz, 75447 Sternenfels (DE); Schaumann, Uwe, 75038 Oberderdingen (DE); Thimm, Wolfgang, 76137 Karlsruhe (DE)
(74) Vertreter: Patentanwälte Ruff, Wilhelm, Beier, Dauster & Partner mbB

(56) Entgegenhaltungen:
- EP-A1- 3 069 648
- DE-A1-102009 046 782
- US-A1- 2010 223 738

## Beschreibung

### ANWENDUNGSGEBIET UND STAND DER TECHNIK

Die Erfindung betrifft eine Pumpenvorrichtung für ein wasserführendes Haushaltsgerät wie beispielsweise eine Waschmaschine oder eine Geschirrspülmaschine, ein entsprechendes wasserführendes Haushaltsgerät sowie ein Verfahren zum Betrieb einer solchen Pumpenvorrichtung.

Es ist aus der WO 02/077353 A1 bekannt, dass bei einem Waschverfahren in einer Waschmaschine mittels einer separaten Dosiereinrichtung Zusatzstoffe hinzugegeben werden können. Eine genaue Dosierung ist damit aber schwer.

Aus der DE 10 2009 046 782 A1 ist eine Waschmaschine bekannt mit einer Pumpe darin, die mit zwei Betriebsarten bzw. unterschiedlichen Drehrichtungen arbeitet. Die eine dient dazu, Wasser zu fördern bzw. abzupumpen. Die andere entgegengesetzte dient dazu, lediglich Waschlauge zu verwirbeln, um ein Reinigungsmittel besser darin lösen zu können.

Aus der US 2010/0223738 A1 ist eine weitere Waschmaschine bekannt mit einer Entwässerungspumpe. Zirkulierendes Wasser wird hinsichtlich seiner Verschmutzung gemessen, und abhängig von einer gemessenen Verschmutzung wird das Wasser abgepumpt oder es zirkuliert noch einmal.

Auch aus der EP 3 069 648 A1 ist ein weiteres wasserführendes Haushaltsgerät bekannt mit einer Vorrichtung zum Verteilen von Waschmittel bzw. Zusatzstoffen.

### AUFGABE UND LÖSUNG

Der Erfindung liegt die Aufgabe zugrunde, eine eingangs genannte Pumpenvorrichtung, ein damit versehenes Haushaltsgerät sowie ein Verfahren zum Betrieb einer solchen Pumpenvorrichtung zu schaffen, mit denen Probleme des Standes der Technik gelöst werden können und es insbesondere möglich ist, eine vielseitig einsetzbare und verwendbare Pumpenvorrichtung zu schaffen bzw. eine Verwendung von Zusatzstoffen und/oder Analysestoffen beim Betrieb eines solchen wasserführenden Haushaltsgeräts zu ermöglichen, wobei vor allem eine genaue Dosierung der Zusatzstoffe und/oder Analysestoffe erreicht werden soll.

Gelöst wird diese Aufgabe durch eine Pumpenvorrichtung mit den Merkmalen des Anspruchs 1, ein Verfahren mit den Merkmalen des Anspruchs 9 sowie ein entsprechendes wasserführendes Haushaltsgerät mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für die Pumpenvorrichtung, nur für das Verfahren oder nur für das wasserführende Haushaltsgerät beschrieben. Sie sollen jedoch unabhängig davon sowohl für die Pumpenvorrichtung selbst als auch für ein entsprechendes Verfahren sowie ein entsprechendes Haushaltsgerät selbstständig und unabhängig voneinander gelten können. Der Wortlaut der Ansprüche wird durch ausdrückliche Bezugnahme zum Inhalt der Beschreibung gemacht.

Es ist vorgesehen, dass die Pumpenvorrichtung eben für ein wasserführendes Gerät bzw. Haushaltsgerät wie beispielsweise eine Waschmaschine oder eine Geschirrspülmaschine vorgesehen ist, wobei vorteilhaft die Pumpenvorrichtung in dem Haushaltsgerät angeordnet ist, insbesondere entsprechend einer üblichen Pumpenvorrichtung für ein solches Haushaltsgerät. Die Pumpenvorrichtung kann auch in anderen wasserführenden Geräten mit Vorteil eingesetzt werden. Die Pumpenvorrichtung weist mindestens eine Pumpenkammer auf, die mindestens zwei Einlässe aufweist, wobei vorteilhaft mindestens ein Einlass der Pumpenkammer auch die Funktion eines Auslasses aufweisen kann. Vorteilhaft ist ein einziger Einlass vorgesehen, der nur als Einlass dient, während auch noch mehrere Einlässe vorhanden sein können, die auch Auslässe sein können. Ein Einlass ist also im Wesentlichen eine Verbindung der Pumpenkammer nach außen unabhängig von der hauptsächlichen Flussrichtung.

An oder in der Pumpenkammer ist mindestens ein Aktor vorgesehen, um mit der Pumpenvorrichtung Flüssigkeit in mindestens einer Richtung pumpen zu können, bevorzugt in beide Richtungen. Dies kann also in die Pumpenkammer hinein zu einem Einlass sein, evtl. dann zu einem weiteren Einlass mit der Funktion als Auslass. Eine weitere Richtung ist wieder hinaus zum Einlass. Eine nochmals weitere Richtung ist von einem anderen Einlass hinein in die Pumpenkammer.

Mindestens ein Sensor ist an oder in der Pumpenkammer vorgesehen, um Inhaltsstoffe und/oder Eigenschaften der Flüssigkeit in der Pumpenkammer bestimmen zu können. Ein solcher Sensor kann grundsätzlich vielfältig ausgebildet sein, insbesondere kann er dazu ausgebildet sein, bestimmte Inhaltsstoffe erkennen zu können, vorzugsweise chemische Inhaltsstoffe oder bestimmte Verunreinigungen, beispielsweise biologische oder sonstige. Vorteilhaft können es mehrere Sensoren sein, beispielsweise auch ein sogenanntes Sensorarray. Des Weiteren können auch elektrische Eigenschaften der Flüssigkeit in der Pumpenkammer bestimmt werden.

Die Pumpenvorrichtung weist eine Vorratskammer auf, die an einen Einlass der Pumpenkammer angeschlossen ist. Die Vorratskammer kann Zusatzstoffe und/oder Analysestoffe für die Flüssigkeit enthalten, wie sie zuvor genannt worden sind. Vorteilhaft ist pro Vorratskammer genau ein Einlass der Pumpenkammer vorgesehen, so dass für den Fall, dass mehrere Vorratskammern gewünscht oder benötigt werden auch mehrere entsprechende Einlässe in der Pumpenkammer vorzusehen sind. So ist jeweils genau ein einziger Einlass mit genau einer einzigen Vorratskammer verbunden.

Auf diese Weise wird eine Pumpenvorrichtung geschaffen, deren Grundaufbau zum einen erweiterbar ist, und die zum anderen vielseitig verwendbar ist sowie klein und kompakt ausgebildet sein kann. Diese Pumpenvorrichtung kann in einer Vielzahl von wasserführenden Geräten eingesetzt werden und spezifisch angepasst werden. So kann mit verschiedenen Grund-Bauteilen eine Art modulare Pumpenvorrichtung aufgebaut werden. In der Pumpenkammer können beispielsweise Eigenschaften der Flüssigkeit bestimmt werden, die in dem Haushaltsgerät gerade benutzt wird als Arbeitsflüssigkeit, so beispielsweise Waschwasser oder Spülwasser. Eine Untersuchung bzw. Bestimmung kann direkt stattfinden, vorteilhaft mittels des vorgenannten Sensors. Weitere Untersuchungsmöglichkeiten ergeben sich dadurch, dass aus mindestens einer Vorratskammer mittels des Aktors oder auf andere Art und Weise ein Analysestoff in die Pumpenkammer gegeben wird bzw. der dort vorhandenen Flüssigkeit oder Arbeitsflüssigkeit beigemischt wird. So können beispielsweise mit bestimmten Markern Verschmutzungen in Form von organischen Verschmutzungen oder auch bakterielle Belastungen der Flüssigkeit des Haushaltsgerätes erkannt werden, wofür dann eben die Sensoren zuständig sind nach deren Sichtbarmachung durch die Zusatzstoffe und/oder Analysestoffe. Da dies im Grundsatz bekannt ist muss es nicht näher erläutert werden. Ein entsprechendes Gerät, welches nach diesem Prinzip funktioniert, wird von der Firma Microlan in den Niederlanden unter der Bezeichnung Bactcontrol angeboten.

Es können auch Zusatzstoffe von einer Vorratskammer in Flüssigkeit eingemischt werden, die von dem mindestens einen Aktor zu diesem Zweck in die Pumpenkammer gebracht worden sind, um dort erst einmal mit dem geringen Volumen von Flüssigkeit vermengt zu werden. Dann wird diese vermischte Flüssigkeit mittels des mindestens einen Aktors aus der Pumpenkammer zum Einlass wieder in das Gerät gebracht, damit der Zusatzstoff dort bestimmungsgemäß wirken kann.

Bei der Erfindung ist die Pumpenkammer elastisch ausgebildet, wobei vorteilhaft der mindestens eine Aktor außen an der Pumpenkammer angeordnet ist. Ein Pumpvorgang erfolgt hier durch Verändern der Form der Pumpenkammer, insbesondere indem auf die Pumpenkammer in einem Flächenbereich gedrückt wird, der zu dem Aktor korrespondiert, insbesondere etwas größer ist. Dadurch ergibt sich eine entsprechende Verengung bzw. Verkleinerung des Querschnitts der Pumpenkammer. Wenn mehrere derartige Aktoren an der Pumpenkammer angeordnet sind, insbesondere nebeneinander bzw. in einer Richtung aufeinander folgend, so kann ein Pumpvorgang stattfinden. Dies ist auch bekannt als sogenannte Peristaltik-Pumpe. Damit können sehr kleine Pumpenvorrichtungen aufgebaut werden, wenn also der Fokus auf Baugröße liegt und weniger auf maximalem Pumpvolumen oder maximaler Genauigkeit. Ein weiterer Vorteil liegt darin, dass der mechanische Aufwand geringer ist und die Zuverlässigkeit höher, da keine zusätzlichen Motoren oder Antriebe wie für Kolbenpumpen oder Rotorpumpen benötigt werden.

Bei einer solchen Pumpenvorrichtung kann vorteilhaft vorgesehen sein, dass mehrere gleichartige, insbesondere identische, Aktoren außen an der Pumpenkammer angeordnet sind. Vorzugsweise sind es drei Aktoren bis sechs Aktoren oder sogar bis zehn Aktoren. Wenn die Pumpenkammer vorteilhaft relativ flach und länglich ist, so können die Aktoren an den gegenüberliegenden Flachseiten angeordnet sein, vorteilhaft gegenüberliegend. Durch gleichzeitige Betätigung von zwei gegenüberliegenden Aktoren kann der dazwischen befindliche Querschnitt der Pumpenkammer sehr gut verkleinert bzw. verengt werden. Besonders vorteilhaft werden mehrere, insbesondere bis zu zehn Aktoren, auf einer bzw. jeder Seite der Pumpenkammer verwendet.

Es ist möglich, beim Betrieb der Pumpenvorrichtung diejenigen Aktoren, die den Einlässen am nächsten angeordnet sind, als deren Verschluss auszubilden. Somit sollten sie sehr nahe zu den Einlässen an der Pumpenkammer angeordnet sein und dazu ausgebildet sein, den Querschnitt der Pumpenkammer soweit verengen zu können, dass mindestens einer der Einlässe eben verschlossen ist, vorteilhaft alle Einlässe. Alternativ können auch separate Ventile vorgesehen sein.

Als Aktoren werden vorteilhaft streifenförmige Aktoren verwendet, die insbesondere parallel zueinander angeordnet sein sollten. Sie können eine Länge aufweisen, die das Zweifache bis Achtfache ihrer Breite beträgt. Ihre Längserstreckung ist vorteilhaft in einer Richtung senkrecht zu einer Richtung der Pumpenkammer von einem Einlass zu einem anderen Einlass bzw. senkrecht zur Pumprichtung.

In einer vorteilhaften Ausgestaltung der Erfindung sind Aktoren an der Außenseite der elastischen Pumpenkammer dielektrische elektroaktive Polymere. Bei Anlegen eines Stroms können sie sich zusammenziehen oder ausdehnen und dabei jeweils den Querschnitt der Pumpenkammer verengen bzw. verkleinern oder erweitern. Derartige elektroaktive Polymere sind allgemein aus Aktorik und Sensorik bekannt, ebenso ihre Aufbringung und Ansteuerung.

Die Pumpenkammer selber kann vorteilhaft ein flacher Silikonschlauch sein für sehr gute und dauerhafte Flexibilität sowie auch eine bestimmte Wärmebeständigkeit. Die Aktoren können dabei auf dem Schlauch direkt befestigt sein durch Aufkleben odgl., alternativ durch mechanisches Befestigen wie Aufklammern odgl. aufgebracht sein. Im Wesentlichen wird hierzu eben auf bekannte Peristaltik-Pumpen verwiesen. Es kann auch ein elektroaktives Polymer-Material selbst aus Silikonfolie bestehen. ELASTOSIL^{®} Film Silikonfolie ist eine vollkommen neuartige Entwicklung der Firma WACKER in Deutschland. Ein solcher hauchdünner, hochpräziser Film aus vernetztem Silikonkautschuk ist in verschiedenen Schichtdicken von 20 µm bis 400 µm als Rollenware erhältlich. Er wird unter Reinraumbedingungen und komplett ohne Lösemittel hergestellt. ELASTOSIL^{®} Silikonfolie eignet sich hervorragend als dielektrische Präzisionsschicht in innovativen und zukunftsweisenden Elektronikanwendungen, die sogenannte EAP (elektroaktive Polymere) verwenden, beispielsweise als Aktoren, Generatoren und intelligente Sensoren.

Vorteilhaft kann die Pumpenvorrichtung noch Heizmittel aufweisen, insbesondere Ohm'sche Heizmittel bzw. Widerstandsheizer. Derartige Heizmittel sind vorteilhaft an einer Außenseite der Pumpenkammer angeordnet, insbesondere daran befestigt. Sie können beispielsweise abwechselnd mit vorgenannten Aktoren an einer Außenseite der Pumpenkammer befestigt sein. Da solche Heizmittel üblicherweise relativ starr und zumindest nicht längenveränderlich ausgebildet sind, wird bei einer elastischen Pumpenkammer mit Vorteil vorgesehen, dass die Heizmittel, ähnlich wie zuvor für die Aktoren als Möglichkeit beschrieben, an die Pumpenkammer angedrückt werden. Möglicherweise können auch flexible Heizmittel bzw. Heizelemente aus textilen Geweben mit eingeflochtenen Heizleitern verwendet werden. Diese können auch bei Bewegung der Pumpenkammer weiterhin anliegen und eine gute Heizwirkung haben. Es sind auch Carbon-nanotube-Schichten auf der Pumpenkammer als Heizleiter denkbar. Entsprechende Heizungen werden unter der Bezeichnung carbo-E-therm von der Firma Future Carbon angeboten.

In weiterer Ausgestaltung der Erfindung weist die Pumpenvorrichtung einen UV-Strahler auf, insbesondere eine UV-LED. Damit kann Flüssigkeit in der Pumpenkammer behandelt werden, beispielsweise können Mikroorganismen abgetötet werden. Des Weiteren ist es mit einem UV-Strahler möglich, manche Analysen besser durchzuführen, beispielsweise wenn als Analysestoff ein bestimmter UV-Marker zu Flüssigkeit in der Pumpenkammer hinzugefügt worden ist. So können eben diese Mikroorganismen nach Markierung mittels des UV-Strahlers sichtbar gemacht werden. Des Weiteren kann mindestens ein entsprechender UV-Detektor vorgesehen sein, der dann eben die reflektierte bzw. sichtbare UV-Strahlung erfasst.

UV-Strahler und/oder UV-Detektor können entweder direkt in der Pumpenkammer, also innerhalb davon, angeordnet sein. Dann ist etwas höherer Aufwand zu betreiben bzgl. deren elektrischer Anschlüsse und Abdichtung. Alternativ können sie außerhalb von der Pumpenkammer angeordnet sein und durch entsprechend lichtdurchlässige Bereiche oder Ausschnitte in die Pumpenkammer hineinstrahlen bzw. Licht aus der Pumpenkammer empfangen. Durch lichtdurchlässige Silikonschläuche entsprechend der eingangs genannten Art ist dies möglich. Es können allgemein auch mehrere völlig unterschiedliche Lichtquellen vorgesehen sein oder Lichtquellen mit variierenden Wellenlängen, um unterschiedliche Untersuchungen durchführen zu können.

Ein Einlass der Pumpenvorrichtung bzw. der Pumpenkammer ist vorteilhaft mit einem Behandlungsraum eines erfindungsgemäßen wasserführenden Gerätes oder Haushaltsgerätes verbunden. Dabei kann ein Höhenunterschied zwischen dem Behandlungsraum bzw. einem dortigen Wasserauslass und dem Einlass bzw. der Pumpenkammer vorgesehen sein, so dass zumindest in einer Richtung das Wasser bzw. die Flüssigkeit selbsttätig läuft. Vorteilhaft ist dabei die Pumpenvorrichtung nicht unterhalb des Behandlungsraums bzw. eines Sumpfes des Behandlungsraums vorgesehen, so dass stets zu jedem Zeitpunkt während des Betriebs des Geräts die Möglichkeit besteht, Flüssigkeit aus dem Behandlungsraum in die Pumpenvorrichtung einzulassen oder zu pumpen ohne Luft anzusaugen. Alternativ kann die Pumpenvorrichtung oberhalb davon angeordnet sein, damit Wasserdruck im Behandlungsraum bzw. am Sumpf nicht automatisch Wasser in die Pumpenvorrichtung hineindrückt. Dann kann ein Rückführen der Flüssigkeit entsprechend einfach sein. Dabei kann in vorteilhafter Ausgestaltung der Erfindung eine Entlüftung der Pumpenkammer vorgesehen sein, insbesondere mittels eines betätigbaren Ventils. Dies kann vor allem beim Zurückpumpen hilfreich sein. Alternativ kann ein Einlass der Pumpenkammer ebenfalls mit dem Behandlungsraum verbunden sein, so dass Flüssigkeit aus der Pumpenkammer nicht wieder denselben Weg durch den Einlass zurück nehmen muss in den Behandlungsraum, sondern quasi durch eine Umwälzung mittels Pumpen wieder in den Behandlungsraum gelangt. So kann auch vermieden werden, dass in einer Leitung zwischen Behandlungsraum und Einlass der Pumpenkammer Wasser zu lange steht, was wiederum in vielen Fällen negativ wäre.

In nochmals weiterer Ausgestaltung eines erfindungsgemäßen Haushaltsgeräts kann es mindestens zwei Pumpenvorrichtungen aufweisen. Diese können prinzipiell gleich ausgebildet sein, vorteilhaft sind sie identisch ausgebildet. Dadurch kann Aufwand für unterschiedliche Varianten eingespart werden. Vor allem zu vielfachen Analysezwecken kann dies möglich sein.

In einer Vorratskammer, die an die Pumpenkammer über einen Einlass angeschlossen ist, können einerseits zuvor erwähnte unterschiedliche Analysestoffe vorgesehen sein. Alternativ können auch Zusatzstoffe für einen Vorgang in dem wasserführenden Haushaltsgerät enthalten sein, beispielsweise Intensivreiniger, Bleichmittel, Weichspüler, Entkalker odgl..

Eine Beheizung der Flüssigkeit in der Pumpenkammer kann zu deren Analyse dienen, insbesondere um bestimmte chemische Vorgänge für die Analyse zu beschleunigen. Des Weiteren können auch eingekapselte Substanzen von beispielsweise vorgenannten Zusatzstoffen thermisch herausgelöst oder freigesetzt werden. Dieses Herauslösen bzw. Freisetzen kann durch einen bestimmten Druck bei der Pumpbewegung, insbesondere wenn es sich um Pumpen nach dem Peristaltik-Prinzip handelt, unterstützt werden.

Es können auch Substanzen wie Enzyme odgl. in einer Vorratskammer enthalten sein, entweder um eine Analyse durchzuführen oder aber um die Behandlung im Behandlungsraum zu unterstützen. Es sind in diesem Zusammenhang auch Messverfahren zur Bestimmung der Enzymaktivität bekannt, siehe beispielsweise die EP 670367 A1.

Ein Volumen der Pumpenkammer kann relativ gering sein, beispielsweise maximal 1 cm³ bis 5 cm³ oder 10 cm³ betragen. Die Vorratskammern können größer sein, beispielsweise 5 cm³ bis 500 cm³.

Es ist also während des Betriebs des wasserführenden Haushaltsgeräts möglich, Flüssigkeit bzw. Wasser aus dem wasserführenden Haushaltsgerät in die Pumpenkammer hineinzupumpen. Bei einer dort vorgenommenen Behandlung wird die Flüssigkeit analysiert, beispielsweise gemäß einer der vorgenannten Möglichkeiten. Dazu können verschiedene Analysestoffe und/oder Markerstoffe aus einer Vorratskammer dienen, die an die Pumpenkammer angeschlossen ist. Nach der Behandlung bzw. Analyse wird die Flüssigkeit bzw. das Wasser wieder in den Behandlungsraum zurückgepumpt und dort wieder vermischt bzw. weiterverwendet.

Bei einer alternativen Möglichkeit der Erfindung kann vorgesehen sein, dass der in die Pumpenkammer gebrachten Flüssigkeit aus dem Behandlungsraum ein Zusatzstoff aus einer der angeschlossenen Vorratskammern beigemischt wird mittels des Aktors. Dann wird die Flüssigkeit wieder in den Behandlungsraum des Haushaltsgeräts zurückgepumpt oder bei einem kreislaufartigen Aufbau weitergepumpt, so dass hierbei weniger die Eigenschaften der Flüssigkeit in dem Behandlungsraum bedeutsam sind, sondern vielmehr beispielsweise ein vorgenannter Zusatzstoff wie Entkalker, Intensivreiniger odgl. beigemischt wird. Dabei kann eine einigermaßen genaue Dosierung erfolgen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine stark schematisierte Darstellung eines erfindungsgemäßen wasserführenden Haushaltsgeräts als Waschmaschine mit einer erfindungsgemäßen Pumpenvorrichtung,
- Fig. 2: eine Vergrößerung einer Draufsicht auf die erfindungsgemäße Pumpenvorrichtung in einer ersten Ausgestaltung,
- Fig. 3: die Pumpenvorrichtung aus Fig. 2 in der Seitenansicht,
- Fig. 4: die Pumpenvorrichtung aus Fig. 3 mit im mittleren Bereich betätigten Aktoren auf der Oberseite und der Unterseite,
- Fig. 5: eine Abwandlung einer Anordnung einer erfindungsgemäßen Pumpenvorrichtung in einer zweiten Ausgestaltung an einer Trommel der Waschmaschine ähnlich Fig. 1 und
- Fig. 6: eine weitere Abwandlung einer Anordnung einer erfindungsgemäßen Pumpenvorrichtung in einer dritten Ausgestaltung mit Umlauf an einer Trommel der Waschmaschine ähnlich Fig. 1.

### DETAILLIERTE BESCHREIBUNG DER AUSFÜHRUNGSBEISPIELE

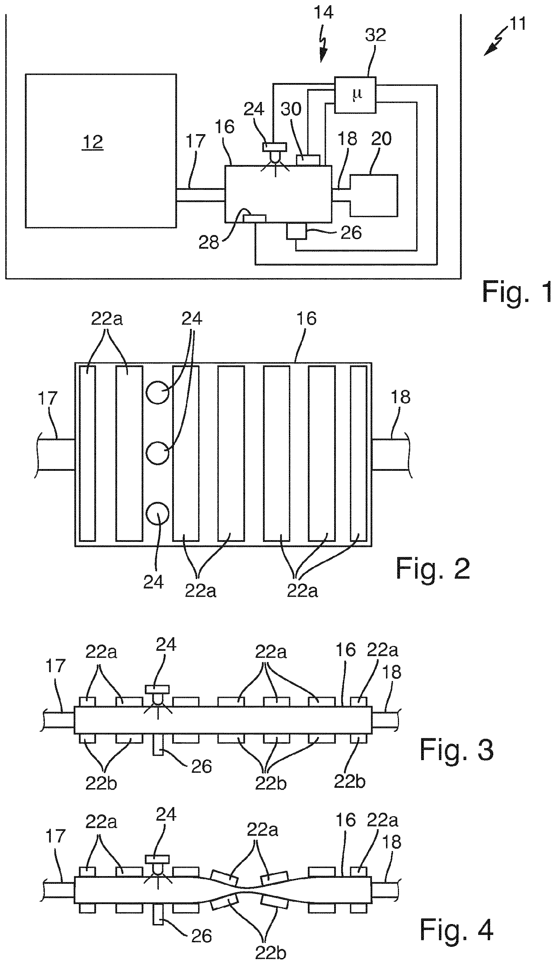

In der Fig. 1 ist stark schematisiert eine Waschmaschine 11 als erfindungsgemäßes wasserführendes Haushaltsgerät dargestellt, die eine Trommel 12 als Behandlungsraum aufweist. Wie eingangs erläutert worden ist, könnte anstelle der Waschmaschine 11 auch eine Geschirrspülmaschine oder ein sonstiges wasserführendes Haushaltsgerät mit mindestens einer Behandlungskammer entsprechend der Trommel 12 vorgesehen sein.

Bei der Anordnung der Fig. 1 ist eine erfindungsgemäße Pumpenvorrichtung 14 gemäß einer ersten Ausgestaltung der Erfindung vorgesehen. Die Pumpenvorrichtung 14 weist eine längliche Pumpenkammer 16 auf, die am einen Ende links über einen ersten Einlass 17 mit der Trommel 12 wasserführend verbunden ist. Rechts bzw. am anderen Ende der Pumpenkammer 16 ist ein zweiter Einlass 18 vorgesehen, über den sie mit einer Vorratskammer 20 verbunden ist. Die Größe der Vorratskammer 20 im Vergleich zur Pumpenkammer 16 ist hier nicht maßstäblich dargestellt, die Vorratskammer 20 kann wesentlich größer sein.

An der Pumpenvorrichtung 14 bzw. an der Pumpenkammer 16 sind diverse Funktionseinheiten vorgesehen. An der Oberseite ist eine UV-LED 24 vorgesehen, die in die Pumpenkammer 16 hineinstrahlt. Dazu ist die Pumpenkammer 16 zumindest im Bereich der UV-LED 24 entsprechend lichtdurchlässig auszubilden, entweder durch die Materialwahl für die Pumpenkammer 16 selbst oder aber durch Einsetzen eines lichtdurchlässigen Fensters odgl.. Die UV-LED 24 kann einerseits dazu dienen, eine Desinfektion in der Pumpenkammer 16 vorzunehmen, wie zuvor erläutert worden ist. Vorteilhaft kann sie für eine Markierungsfunktion mit einem Marker aus der Vorratskammer 20 an diversen Verunreinigungen und/oder Mikroorganismen in der Flüssigkeit vorgesehen sein, wofür dann ein Detektor 26 an der Pumpenkammer 16 angeordnet ist. Auch dieser ist an einem lichtdurchlässigen Bereich der Pumpenkammer 16 angeordnet, vorteilhaft so, dass er möglichst gut erkennen kann, wenn die UV-LED 24 bestimmte Stoffe oder Mikroorganismen in der Flüssigkeit in der Pumpenkammer 16 sichtbar macht. Dies ist aber aus dem Stand der Technik bekannt und braucht hier nicht näher erläutert zu werden.

Des Weiteren ist in der Pumpenkammer 16 ein Sensor 28 vorgesehen. Dieser Sensor 28 kann grundsätzlich beliebiger Natur sein bzw. beliebige Funktion aufweisen. Insbesondere kann er bestimmte Inhaltsstoffe in der Flüssigkeit in der Pumpenkammer 16 erkennen, es kann also auch ein komplexerer Sensor sein, beispielsweise ein Bio-Sensor.

An der Oberseite der Pumpenkammer 16 ist als beispielhafter Anbringungsort ein Heizelement 30 dargestellt. Dieses Heizelement 30 kann im Prinzip an beliebiger Stelle vorgesehen sein, insbesondere auch größerflächig, es können mehrere Heizelemente 30 vorgesehen sein. Das Heizelement 30 dient dazu, wie eingangs erläutert worden ist, Flüssigkeit in der Pumpenkammer 16 zu erwärmen, um insbesondere bestimmte Reaktionen oder Abläufe zu ermöglichen oder zu beschleunigen.

Die genannten Funktionseinheiten von UV-LED 24, Detektor 26, Sensor 28 und Heizelement 30 sind sämtlich mit einer Steuerung 32 verbunden. Diese Steuerung 32 ist auch mit der Pumpenkammer 16 selbst derart verbunden, dass sie daran angebrachte Aktoren entsprechend ansteuern kann zum Pumpen. Des Weiteren steuert die Steuerung 32 die vorgenannten Funktionseinheiten an bzw. wertet diese aus.

Aus der vergrößerten Draufsicht auf die Pumpenkammer 16 als zentrales Funktionsteil der Pumpenvorrichtung 14 ist zu erkennen, dass in dieser Ausgestaltung der Erfindung eine eingangs beschriebene Peristaltik-Pumpe vorliegt. Dazu besteht die Pumpenkammer 16 aus einem elastischen Material, beispielsweise ausgebildet als flacher Silikonschlauch oder als flaches und flexibles rechteckiges Gehäuse. Die Einlässe 17 und 18 gehen an gegenüberliegenden Enden ab und sind vorteilhaft einstückig mit der Pumpenkammer 16 ausgeformt. Ein Anschluss an die Trommel 12 oder die Vorratskammer 20 kann über Stecknippel, Klemmnippel odgl. erfolgen.

Bei dieser Peristaltik-Pumpe sind an der Pumpenkammer 16, wie auch der Vergleich mit den Fig. 3 und 4 zeigt, mehrere streifenförmige Aktoren 22a an der Oberseite und Aktoren 22b an einer gegenüberliegenden Unterseite angeordnet, wobei Oberseite und Unterseite jeweils Flachseiten sind. Die Aktoren 22 können aufgeklebt, eingegossen oder auf andere Art und Weise mit der Pumpenkammer 16 verbunden sein, insbesondere fest verbunden sein. Es ist zu erkennen, dass durch die jeweils sieben Aktoren 22a bzw. 22b zwar einerseits die Fläche bzw. die Längserstreckung der Pumpenkammer 16 zwischen den Einlässen 17 und 18 relativ gut abgedeckt wird, so dass hier von einer guten Pumpwirkung ausgegangen werden kann. Gleichzeitig ist zwischen einzelnen Aktoren 22 noch genügend Platz, um die UV-LED 24 so außen anzuordnen bzw. zu befestigen, dass sie eine ausreichend große Einstrahlfläche in die Pumpenkammer 16 aufweisen. Gemäß der seitlichen Ansicht der Fig. 3 und 4 ist der Detektor 26 gegenüber der UV-LED 24 angeordnet, so dass er ebenfalls ausreichend Platz für seine Anordnung zwischen zwei Aktoren 22b hat.

Die Heizmittel 30 sind hier nicht dargestellt, ebenso nicht der Sensor 28. Deren Anordnung ist aber für den Fachmann leicht vorstellbar anhand der oben gemachten Ausführungen. Eine elektrische Kontaktierung an den Sensor 28 nach außen kann entweder durch die Wandung der Pumpenkammer 16 führen, wobei ein solcher Durchgang dann gut abgedichtet sein muss. Alternativ kann ein elektrischer Anschluss als dünnes Kabel zum Einlass 17 oder 18 herausgeführt sein und dann dort an einer Stelle nach außen gehen, die leichter abgedichtet werden kann, da sie insbesondere aus starrem Material bestehen kann und nicht so stark bewegt werden muss wie die Wandung der Pumpenkammer 16 selbst.

Der Vergleich der Fig. 3 und 4 zeigt, wie durch Aktivierung bzw. Betätigung von zwei zentralen Aktoren 22a oben und Aktoren 22b unten eine deutliche Querschnittsverengung erreicht werden kann, möglicherweise sogar soweit, dass sich die Kammerwandungen berühren. Dies muss aber nicht unbedingt sein. Durch eine von Peristaltik-Pumpen bekannte aufeinander folgende Aktivierung und Deaktivierung von nebeneinander liegenden Aktoren in Richtung der gewünschten Pumprichtung kann Flüssigkeit gepumpt werden in der Pumpenkammer 16. Die verschiedenen Möglichkeiten sind zuvor bereits genannt worden. Einerseits ist es eben möglich, dass Wasser bzw. Flüssigkeit aus der Trommel 12 in die Pumpenkammer 16 hineingepumpt wird. Andererseits kann das Wasser wieder herausgepumpt werden.

Die jeweils ganz linken und die jeweils ganz rechten Aktoren 22a und 22b dienen als eine Art Verschluss für Einlass 17 und 18 bzw. als eine Art Ventil. Für diese sollte vorgesehen sein, möglicherweise durch an der Innenseite der Wandung der Pumpenkammer 16 vorgesehene Erhebungen nach Art von Rippen odgl., dass die Querschnittsverjüngung tatsächlich so weit geht, dass sich die Pumpenkammerwandungen berühren. Dann kann eine Art Ventilfunktion mit Verschlusswirkung für die Einlässe 17 und 18 erreicht werden, so dass separate Ventile oder sonstige Verschlusseinrichtungen eingespart werden können. Dies ermöglicht vor allem eine jeweils genaue Dosierung der gepumpten Flüssigkeit bzw. von Hinzugabe von eingangs genannten Zusatzstoffen bzw. Analysestoffen aus der Vorratskammer 20.

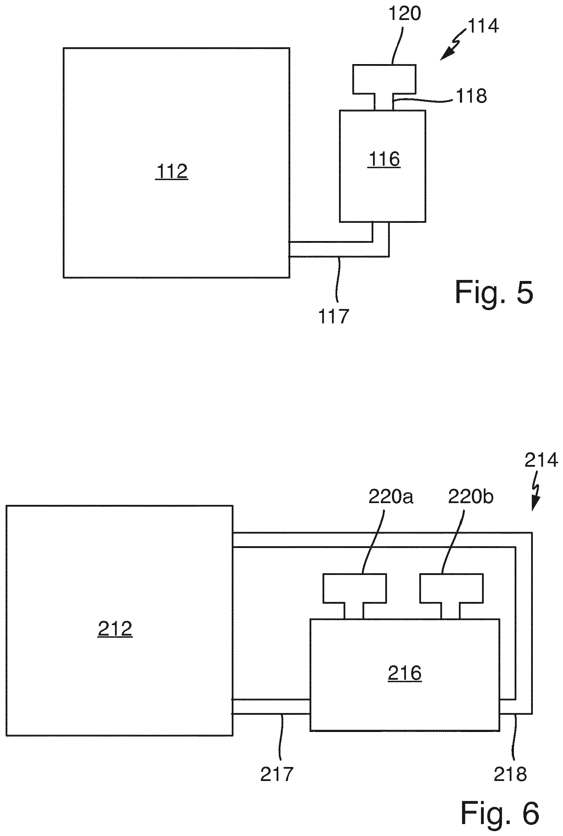

Grundsätzlich können in einer Waschmaschine 11 entsprechend Fig. 1 mit der jeweiligen Wasserführung auch die zuvor erläuterten anderen Arten von Pumpen eingesetzt werden, beispielsweise Kolbenpumpen oder Rotationspumpen. Dies gilt auch für die nachfolgenden Anordnungen der Fig. 5 und 6.

In der Fig. 5 ist eine weitere Pumpenvorrichtung 114 in einer zweiten Ausgestaltung entsprechend der Erfindung dargestellt, mit einer Pumpenkammer 116, die derjenigen der Fig. 1 bis 4 weitgehend entsprechen kann und deswegen nicht noch einmal näher erläutert wird. Es ist auch eine Peristaltik-Pumpe. Allerdings ist hier die Pumpenkammer 116 so ausgebildet, dass sie quasi vertikal verläuft bzw. ihre Pumprichtung vertikal ist. Eine wasserführende Verbindung von der Trommel 112 als Einlass 117 geht an ein unteres Ende der Pumpenkammer 116. Am oberen Ende der Pumpenkammer 116 ist ein Einlass 118 zu einer höher bzw. darüber angeordneten Vorratskammer 120 vorgesehen. So kann erreicht werden, dass nach Öffnen einer zuvor beschriebenen, quasi als Ventil für die Vorratskammer 20 bzw. den Einlass 118 arbeitenden Verschlusseinrichtung Zusatzstoffe bzw. Analysestoffe aus der Vorratskammer 120 im Wesentlichen selbsttätig in die Pumpenkammer 116 gelangen, also durch Schwerkraft. In ähnlicher Art kann durch die Anordnung der Pumpenkammer 116 oberhalb des Einlasses 117 als Verbindung zur Trommel 112 erreicht werden, dass Flüssigkeit durch Schwerkraft unterstützt aus der Pumpenkammer 116 zurück in die Trommel 112 fließt.

Eine nochmals weitere dritte Ausgestaltung einer Anordnung bzw. Pumpenvorrichtung 214 gemäß der Erfindung sieht in Fig. 6 vor, dass eine Pumpenkammer 216 eine im Wesentlichen beliebige Pumprichtung aufweist, hier horizontal von einem ersten Einlass 217 zu einer Trommel 212 durch die Pumpenkammer 216 hin zu einem zweiten Einlass 218. Dieser Einlass 218 führt dann aber direkt wieder zurück zu der Trommel 212, so dass hier die Pumpenvorrichtung 214 sozusagen im Umlauf arbeitet bzw. Flüssigkeit umwälzen kann. Dies kann eine Untersuchung oder Behandlung der Flüssigkeit in der Pumpenkammer 216 vereinfachen, insbesondere deren sichere und vollständige Rückführung in die Trommel 212 verbunden mit sicherer Leerung der Pumpenkammer 216. Eine solche Anordnung kann also vor allem dann von Vorteil sein, wenn Zusatzstoffe mittels der Pumpenvorrichtung 214 in die Trommel 212 gegeben werden sollen, beispielsweise zur Unterstützung eines Waschvorgangs. Die Pumpenkammer 216 weist hier zwei an der Oberseite angeordnete bzw. angebundene Vorratskammern 220a und 220b auf. Diese sind mit eigenen Aktoren oder Verschlusseinrichtungen odgl. versehen, so dass aus ihnen individuell Zusatzstoffe in die Pumpenkammer 216 gegeben werden können, die dann durch mitgepumpte Flüssigkeit in die Trommel 212 gegeben werden können. Des Weiteren kann auch vorgesehen sein, dass in der einen Vorratskammer 220a Zusatzstoffe für einen Waschvorgang in der Trommel 212 vorgesehen sind. In der anderen Vorratskammer 220b können Analysestoffe für eine Analyse des Wassers aus der Trommel 212 vorgesehen sein. Somit kann mit einer solchen Pumpenvorrichtung 214 Wasser bzw. Flüssigkeit in der Trommel 212 sowohl analysiert werden als auch mit Zusatzstoffen versetzt werden, je nach Bedarf.

## Patentansprüche

1. Pumpenvorrichtung (14, 114, 214) für ein wasserführendes Haushaltsgerät wie eine Waschmaschine (11) oder eine Geschirrspülmaschine, mit:
- einer Pumpenkammer (16, 116, 216) mit zwei Einlässen (17, 18, 117, 118, 217, 218),
- mindestens einem Aktor (22a, 22b) an oder in der Pumpenkammer für einen Pumpvorgang von Flüssigkeit in mindestens einer Richtung,
- mindestens einem Sensor (28) an oder in der Pumpenkammer zur Bestimmung von Inhaltsstoffen und/oder Eigenschaften der Flüssigkeit in der Pumpenkammer,
**dadurch gekennzeichnet, dass**
- eine Vorratskammer (20, 120, 220) vorgesehen ist, die an einen Einlass (17, 18, 117, 118, 217, 218) der Pumpenkammer (16, 116, 216) angeschlossen ist und die Zusatzstoffe und/oder Analysestoffe für die Flüssigkeit enthält,
- die Pumpenkammer (16, 116, 216) elastisch ausgebildet ist und der mindestens eine Aktor (22a, 22b) außen an der Pumpenkammer angeordnet ist für einen Pumpvorgang durch Verändern der Form der Pumpenkammer (16, 116, 216).

2. Pumpenvorrichtung nach Anspruch 1, **dadurch gekennzeichnet, dass** die Pumpenkammer (16, 116, 216) ausgebildet ist für einen Pumpvorgang durch Drücken auf die Pumpenkammer in einem Flächenbereich korrespondierend zu dem Aktor (22a, 22b) mit entsprechender Verengung bzw. Verkleinerung des Querschnitts der Pumpenkammer.

3. Pumpenvorrichtung nach Anspruch 1 oder 2, **dadurch gekennzeichnet, dass** mehrere gleichartige, insbesondere identische, Aktoren (22a, 22b) außen an der Pumpenkammer (16, 116, 216) angeordnet sind, vorzugsweise drei Aktoren bis zehn Aktoren, wobei insbesondere die Aktoren in einer Richtung von einem Einlass (17, 117, 217) zu einem anderen Einlass (18, 118, 218) der Pumpenkammer nebeneinander angeordnet sind.

4. Pumpenvorrichtung nach einem der vorhergehenden Ansprüche, **dadurch gekennzeichnet, dass** die Aktoren (22a, 22b) streifenförmig ausgebildet sind und parallel zueinander angeordnet sind, wobei sie vorzugsweise in Richtung senkrecht zu einer Richtung von einem Einlass (17, 117, 217) zu einem anderen Einlass (18, 118, 218) der Pumpenkammer (16, 116, 216) verlaufen.

5. Pumpenvorrichtung nach einem der vorhergehenden Ansprüche, **dadurch gekennzeichnet, dass** die Aktoren (22a, 22b) an der Außenseite der elastischen Pumpenkammer (16, 116, 216) elektroaktive Polymere sind und/oder die Pumpenkammer ein Silikonschlauch ist.

6. Pumpenvorrichtung nach einem der vorhergehenden Ansprüche, **dadurch gekennzeichnet, dass** ein Aktor (22a, 22b) dazu ausgebildet ist einen der Einlässe (17, 18, 117, 118, 217, 218) der Pumpenkammer (16, 116, 216) und/oder die Vorratskammer (20, 120, 220) zu verschließen.

7. Pumpenvorrichtung nach einem der vorhergehenden Ansprüche, **dadurch gekennzeichnet, dass** sie Heizmittel (30) aufweist, insbesondere Ohm'sche Heizmittel, wobei vorzugsweise die Heizmittel an einer Außenseite der Pumpenkammer (16) angeordnet sind.

8. Pumpenvorrichtung nach einem der vorhergehenden Ansprüche, **dadurch gekennzeichnet, dass** an oder in der Pumpenkammer (16) mindestens ein UV-Strahler (24) angeordnet ist, insbesondere ausgebildet ist als eine UV-LED, und/oder mindestens ein UV-Detektor (26) angeordnet ist.

9. Verfahren zum Betrieb einer Pumpenvorrichtung (14, 114, 214) nach einem der vorhergehenden Ansprüche in einem wasserführenden Haushaltsgerät (11), **gekennzeichnet durch** die Schritte:
- Flüssigkeit bzw. Wasser werden aus dem wasserführenden Haushaltsgerät in die Pumpenkammer (16, 116, 216) hineingepumpt,
- die Flüssigkeit bzw. das Wasser werden in der Pumpenkammer (16, 116, 216) einer Behandlung unterzogen,
- die Flüssigkeit wird in der Pumpenkammer (16, 116, 216) als Behandlung mit einem Zusatzstoff und/oder einem Analysestoff aus der Vorratskammer (20, 120, 220) versetzt durch den wenigstens einen Aktor (22a, 22b),
- anschließend wird die Flüssigkeit wieder zurück in das wasserführende Haushaltsgerät (11) gepumpt.

10. Verfahren nach Anspruch 9, **dadurch gekennzeichnet, dass** die Flüssigkeit wieder in das wasserführende Haushaltsgerät (11) zurückgepumpt wird damit der Zusatzstoff und/oder Analysestoff aus der Vorratskammer beim Betrieb des wasserführenden Haushaltsgeräts bestimmungsgemäß wirkt.

11. Verfahren nach Anspruch 9 oder 10, **dadurch gekennzeichnet, dass** Wasser oder Flüssigkeit aus dem wasserführenden Haushaltsgerät (11) in die Pumpenvorrichtung (14, 114, 214) gepumpt wird und dort mittels des Sensors (28) untersucht wird, insbesondere bzgl. Verschmutzung, wobei vorzugsweise zur Untersuchung Heizmittel (30) gemäß Anspruch 7 zusätzlich verwendet werden und/oder ein Zusatzstoff bzw. ein Analysestoff aus der Vorratskammer (20, 120, 220) in die Pumpenkammer (16, 116, 216) gebracht werden zur Unterstützung der Untersuchung.

12. Wasserführendes Haushaltsgerät (11) mit einer Pumpenvorrichtung (14) nach einem der Ansprüche 1 bis 8, wobei das wasserführende Haushaltsgerät eine Waschmaschine oder eine Geschirrspülmaschine ist und einen Behandlungsraum (12) aufweist, der mit der Pumpenvorrichtung wasserführend verbunden ist, **dadurch gekennzeichnet, dass** die Pumpenvorrichtung (14) oberhalb eines Bodens oder eines Sumpfes des Behandlungsraums angeordnet ist.

13. Wasserführendes Haushaltsgerät (11) nach Anspruch 12, **dadurch gekennzeichnet, dass** es mindestens zwei Pumpenvorrichtungen (14) aufweist, wobei vorzugsweise die Pumpenvorrichtungen identisch ausgebildet sind.

## Claims

1. Pump device (14, 114, 214) for a water-conducting domestic appliance, such as a washing machine (11) or a dishwasher, having:
- a pump chamber (16, 116, 216) with two inlets (17, 18, 117, 118, 217, 218),
- at least one actuator (22a, 22b) on or in the pump chamber for a pumping operation of liquid in at least one direction,
- at least one sensor (28) on or in the pump chamber for determining constituents and/or properties of the liquid in the pump chamber,
**characterized in that**
- a storage chamber (20, 120, 220) is provided, which is connected to an inlet (17, 18, 117, 118, 217, 218) of the pump chamber (16, 116, 216) and which contains additives and/or analytes for the liquid,
- the pump chamber (16, 116, 216) is of elastic design, and arranged on the outside of the pump chamber is the at least one actuator (22a, 22b) for a pumping process by way of variation of the shape of the pump chamber (16, 116, 216).

2. Pump device according to claim 1, **characterized in that** the pump chamber (16, 116, 216) is configured for a pumping process by way of pressing onto the pump chamber in a surface region which corresponds to the actuator (22a, 22b) with corresponding narrowing or reduction of the cross section of the pump chamber.

3. Pump device according to claim 1 or 2, **characterized in that** multiple similar, in particular identical, actuators (22a, 22b) are arranged on the outside of the pump chamber (16, 116, 216), preferably three actuators to ten actuators, wherein in particular the actuators are arranged next to one another in a direction from one inlet (17, 117, 217) to another inlet (18, 118, 218) of the pump chamber.

4. Pump device according to any of the preceding claims, **characterized in that** the actuators (22a, 22b) are of strip-shaped form and are arranged parallel to one another, wherein they preferably extend in a direction perpendicular to a direction from one inlet (17, 117, 217) to another inlet (18, 118, 218) of the pump chamber (16, 116, 216).

5. Pump device according to any of the preceding claims, **characterized in that** the actuators (22a, 22b) on the outer side of the elastic pump chamber (16, 116, 216) are electro-active polymers, and/or the pump chamber is a silicone tube.

6. Pump device according to any of the preceding claims, **characterized in that** one actuator (22a, 22b) is designed to close one of the inlets (17, 18, 117, 118, 217, 218) of the pump chamber (16, 116, 216) and/or the storage chamber (20, 120, 220).

7. Pump device according to any of the preceding claims, **characterized in that** said device has heating means (30), in particular ohmic heating means, wherein the heating means are preferably arranged on an outer side of the pump chamber (16).

8. Pump device according to any of the preceding claims, **characterized in that** arranged on or in the pump chamber (16) is at least one UV emitter (24), in particular being designed as a UV LED, and/or at least one UV detector (26).

9. Method for operating a pump device (14, 114, 214) according to any of the preceding claims in a water-conducting domestic appliance (11), **characterized by** the steps:
- liquid or water is pumped from the water-conducting domestic appliance into the pump chamber (16, 116, 216),
- the liquid or water are subjected to treatment in the pump chamber (16, 116, 216),
- the liquid in the pump chamber (16, 116, 216) is mixed with an additive and/or an analyte from the storage chamber (20, 120, 220) by way of the at least one actuator (22a, 22b) for treatment,
- subsequently the liquid is pumped back again into the water-conducting domestic appliance (11).

10. Method according to claim 9, **characterized in that** the liquid is pumped back again into the water-conducting domestic appliance (11), in order that the additive and/or analyte from the storage chamber acts according to its/their intended use during the operation of the water-conducting domestic appliance.

11. Method according to claim 9 or 10, **characterized in that** water or liquid from the water-conducting domestic appliance (11) is pumped into the pump device (14, 114, 214) and is examined there by means of the sensor (28), in particular in relation to contamination, wherein preferably, for the purpose of examination, heating means (30) according to Claim 7 are additionally used and/or an additive or an analyte is brought from the storage chamber (20, 120, 220) into the pump chamber (16, 116, 216) in order to assist with the examination.

12. Water-conducting domestic appliance (11) having a pump device (14) according to any of claims 1 to 8, wherein the water-conducting domestic appliance is a washing machine or a dishwasher and has a treatment space (12) which is connected in a water-conducting manner to the pump device, **characterized in that** the pump device (14) is arranged above a base or sump of the treatment space.

13. Water-conducting domestic appliance (11) according to claim 12, **characterized in that** said appliance has at least two pump devices (14), wherein preferably the pump devices are of identical design.

## Revendications

1. Dispositif de pompage (14, 114, 214) pour un appareil électroménager d'acheminement d'eau, tel qu'une machine à laver (11) ou un lave-vaisselle, comprenant :
- une chambre de pompe (16, 116, 216) avec deux entrées (17, 18, 117, 118, 217, 218),
- au moins un actionneur (22a, 22b) sur ou dans la chambre de pompe pour un processus de pompage de liquide vers au moins une direction,
- au moins un capteur (28) sur ou dans la chambre de pompe pour une détermination d'ingrédients et/ou propriétés du liquide dans la chambre de pompe,
**caractérisé en ce que**
- une chambre de réserve (20, 120, 220) est prévue, raccordée à une entrée (17, 18, 117, 118, 217, 218) de la chambre de pompe (16, 116, 216) et contenant additifs et/ou substances d'analyse pour le liquide,
- la chambre de pompe (16, 116, 216) est élastique et l'au moins un actionneur (22a, 22b) est disposé à l'extérieur de la chambre de pompe pour un processus de pompage par variation de la forme de la chambre de pompe (16, 116, 216).

2. Dispositif de pompage selon la revendication 1, **caractérisé en ce que** la chambre de pompe (16, 116, 216) est configurée pour un processus de pompage par pression sur la chambre de pompe dans une zone superficielle correspondant à l'actionneur (22a, 22b) avec rétrécissement ou réduction de la section de la chambre de pompe correspondant.

3. Dispositif de pompage selon la revendication 1 ou 2, **caractérisé en ce que** plusieurs actionneurs (22a, 22b) similaires, en particulier identiques, sont disposés à l'extérieur de la chambre de pompe (16, 116, 216), de préférence trois actionneurs à dix actionneurs, dans lequel en particulier les actionneurs sont arrangés en juxtaposition dans une direction d'une entrée (17, 117, 217) à une autre entrée (18, 118, 218) de la chambre de pompe.

4. Dispositif de pompage selon l'une quelconque des revendications précédentes, **caractérisé en ce que** les actionneurs (22a, 22b) sont en forme de bande et arrangés parallèles l'un à l'autre, dans lequel de préférence les actionneurs s'étendent dans une direction perpendiculaire à une direction d'une entrée (17, 117, 217) à une autre entrée (18, 118, 218) de la chambre de pompe (16, 116, 216).

5. Dispositif de pompage selon l'une quelconque des revendications précédentes, **caractérisé en ce que** les actionneurs (22a, 22b) sur le côté extérieur de la chambre de pompe élastique (16, 116, 216) sont des polymères électro-actifs et/ou la chambre de pompe est un tube de silicone.

6. Dispositif de pompage selon l'une quelconque des revendications précédentes, **caractérisé en ce qu'**un actionneur (22a, 22b) est configuré pour fermer l'une des entrées (17, 18, 117, 118, 217, 218) de la chambre de pompe (16, 116, 216) et/ou la chambre de réserve (20, 120, 220).

7. Dispositif de pompage selon l'une quelconque des revendications précédentes, **caractérisé en ce que** le dispositif présente des moyens de chauffage (30), en particulier des moyens de chauffage ohmiques, dans lequel de préférence les moyens de chauffage sont disposés sur un côté extérieur de la chambre de pompe (16).

8. Dispositif de pompage selon l'une quelconque des revendications précédentes, **caractérisé en ce que** sur ou dans la chambre de pompe (16) au moins un émetteur UV (24) est disposé, en particulier configuré sous forme de LED-UV, et/ou au moins un détecteur UV (26) est disposé.

9. Procédé de fonctionnement d'un dispositif de pompage (14, 114, 214) selon l'une quelconque des revendications précédentes dans un appareil électroménager d'acheminement d'eau (11), **caractérisé par** les étapes suivantes :
- pomper liquide ou de l'eau de l'appareil électroménager d'acheminement d'eau dans la chambre de pompe (16, 116, 216),
- soumettre le liquide ou l'eau à un traitement dans la chambre de pompe (16, 116, 216),
- ajouter un additif et/ou une substance d'analyse de la chambre de réserve (20, 120, 220) par l'au moins un actionneur (22a, 22b) en tant que traitement du liquide dans la chambre de pompe (16, 116, 216),
- ensuite pomper le liquide en retour dans l'appareil électroménager d'acheminement d'eau (11).

10. Procédé selon la revendication 9, **caractérisé en ce que** le liquide est pompé en retour dans l'appareil électroménager d'acheminement d'eau (11) afin que l'additif et/ou la substance d'analyse de la chambre de réserve agisse conforme à sa destination pendant le fonctionnement de l'appareil électroménager d'acheminement d'eau.

11. Procédé selon la revendication 9 ou 10, **caractérisé en ce que** de l'eau ou liquide de l'appareil électroménager d'acheminement d'eau (11) est pompé dans le dispositif de pompage (14, 114, 214) et analysé là au moyen du capteur (28), en particulier quant à contamination, dans lequel de préférence pour l'analyse en outre des moyens de chauffage (30) selon la revendication 7 sont appliqués et/ou un additif ou une substance d'analyse est amené de la chambre de réserve (20, 120, 220) à la chambre de pompe (16, 116, 216) pour l'assistance à l'analyse.

12. Appareil électroménager d'acheminement d'eau (11) avec un dispositif de pompage (14) selon l'une quelconque des revendications 1 à 8, dans lequel l'appareil électroménager d'acheminement d'eau est sous forme d'une machine à laver ou un lave-vaisselle et présente un compartiment de traitement (12) qui est raccordé au dispositif de pompage d'acheminement d'eau, **caractérisé en ce que** le dispositif de pompage (14) est disposé au-dessus d'un fond ou carter du compartiment de traitement.

13. Appareil électroménager d'acheminement d'eau (11) selon la revendication 12, **caractérisé en ce que** l'appareil présente au moins deux dispositifs de pompage (14), de préférence les dispositifs de pompage étant de configuration identique.
